# EUROPÄISCHE PATENTSCHRIFT

(11) **EP 2 089 300 B1**
(45) Veröffentlichungstag und Bekanntmachung des Hinweises auf die Patenterteilung: **21.12.2011**
(21) Anmeldenummer: 07818914.9
(22) Anmeldetag: 11.10.2007
(51) Int. Cl.: B65G 47/00, B65G 63/00, B65G 67/00, B65G 69/00

(54) **VERFAHREN ZUM UMSCHLAGEN VON LUFTFRACHTLADEEINHEITEN SOWIE UMSCHLAG- UND SICHERHEITSKONTROLLANLAGE ZUR DURCHFÜHRUNG DIESES VERFAHRENS**
METHOD FOR TRANSFERRING AIR CARGO LOADING UNITS, AND TRANSFER AND SCREENING SYSTEM FOR CARRYING OUT SAID METHOD
PROCÉDÉ POUR TRANSFÉRER DES UNITÉS DE CHARGEMENT DE FRET AÉRIEN, ET SYSTÈME DE TRANSFERT ET DE TRANSBORDEMENT PERMETTANT LA MISE EN OEUVRE DUDIT PROCÉDÉ

(30) Priorität: 11.10.2006 DE 202006015603 U
(43) Veröffentlichungstag der Anmeldung: 19.08.2009
(73) Patentinhaber: Fraport AG, 60547 Frankfurt am Main (DE); Fraunhofer-Gesellschaft zur Förderung der angewandten Forschung e.V., 80686 München (DE)
(72) Erfinder: LESSMANN, Bernhard, 63263 Neu-Isenburg (DE); BIERWIRTH, Benjamin, 60320 Frankfurt am Main (DE); FRYE, Heinrich, 63263 Neu-Isenburg (DE)
(74) Vertreter: Prinz & Partner
(86) Internationale Anmeldenummer: PCT/EP2007/008843
(87) Internationale Veröffentlichungsnummer: WO 2008/043556

(56) Entgegenhaltungen:
- US-A- 4 251 726
- US-A- 5 668 342

## Beschreibung

Die Erfindung betrifft ein Verfahren zum Umschlagen von Luftfrachtladeeinheiten zwischen einem öffentlich zugänglichen Betriebsbereich und einem sicherheitssensiblen Vorfeldbereich sowie eine Umschlag- und Sicherheitskontrollanlage zur Durchführung dieses Verfahrens.

Der Umschlag von Luftfrachtladeeinheiten auf Flughäfen von einem Straßen- oder Schienentransportmittel auf ein Luftfracht-Vorfeldtransportmittel ist stets mit einem Übergang der Fracht von einem öffentlich zugänglichen Betriebsbereich in einen gesicherten und sicherheitssensiblen Vorfeldbereich verbunden. Bisher erfolgte dabei zunächst der Umschlag der Luftfrachtladeeinheiten im öffentlich zugänglichen Betriebsbereich vom Straßen- bzw. Schienentransportmittel auf das Luftfracht-Vorfeldtransportmittel, z.B. mit Hilfe von Gabelstaplern. Danach wurde beim Übergang des beladenen Luftfracht-Vorfeldtransportmittels vom öffentlich zugänglichen Betriebsbereich in den sicherheitssensiblen Vorfeldbereich eine umfangreiche Sicherheitskontrolle durchgeführt, die neben der Kontrolle der Luftfrachtladeeinheiten jeweils auch eine Sicherheitskontrolle des Vorfeldtransportmittels und dessen Fahrers beinhaltete.

Der Aufwand zur Durchführung des Warenumschlags und der damit verbundenen Sicherheitskontrollen steigt dabei vor dem Hintergrund verschärfter Sicherheitsbestimmungen stetig.

Die Erfindung schafft nun ein Verfahren zum Umschlagen von Luftfrachtladeeinheiten zwischen einem öffentlich zugänglichen Betriebsbereich und einem sicherheitssensiblen Vorfeldbereich, mit einer stationären Umschlag- und Sicherheitskontrollanlage, die eine erste Übergabevorrichtung, eine zweite Übergabevorrichtung und eine dazwischenliegende Frachtschleuse umfaßt, wobei die Frachtschleuse einen Schleusenraum aufweist, der über ein Frachteingangstor mit der ersten Übergabevorrichtung und über ein Frachtausgangstor mit der zweiten Übergabevorrichtung in Verbindung steht, und wobei das Verfahren folgende Schritte aufweist:
a) Die Luftfrachtladeeinheiten werden von einem Straßen- oder Schienentransportmittel über den öffentlich zugänglichen Betriebsbereich angeliefert;
b) das Frachteingangstor wird bei geschlossenem Frachtausgangstor geöffnet;
c) die Luftfrachtladeeinheiten werden mittels der ersten Übergabevorrichtung in den Schleusenraum befördert;
d) der Schleusenraum wird durch Schließen des Frachteingangstors vom öffentlich zugänglichen Betriebsbereich getrennt;
e) im geschlossenen Schleusenraum wird eine Sicherheitskontrolle der Luftfrachtladeeinheiten vorgenommen;
f) der Schleusenraum wird durch öffnen des Frachtausgangstors mit dem sicherheitssensiblen Vorfeldbereich verbunden;
g) die Luftfrachtladeeinheiten werden mittels der zweiten Übergabevorrichtung auf Luftfracht-Vorfeldtransporteinheiten verladen.

Bei diesem Verfahren ist die Sicherheitskontrolle vorteilhaft in den Umschlagvorgang integriert, wobei die für den Umschlag eingesetzte Förderstrecke für den Sicherheitskontrollprozeß genutzt wird. Mit Blick auf den zeitlichen Ablauf ist die Sicherheitskontrolle jedoch innerhalb des Umschlagverfahrens entkoppelt, da das Umschlagverfahren in mehrere abgeschlossene Verfahrensabschnitte unterteilbar ist, die unmittelbar hintereinander oder mit Zeitverzug durchführbar sind. Das Anliefer- bzw. Entladepersonal, das Sicherheitspersonal sowie das Vorfeldpersonal können folglich im wesentlichen unabhängig voneinander arbeiten, so daß das Verfahren besonders personaleffizient durchführbar ist.

Vorzugsweise bewegen sich die Luftfracht-Vorfeldtransporteinheiten ausschließlich innerhalb des sicherheitssensiblen Vorfeldbereichs. Dadurch entfallen die wiederkehrenden, zeitraubenden Sicherheitskontrollen des Vorfeldtransportmittels und dessen Fahrers beim Übergang vom öffentlichen Betriebsbereich zum sicherheitssensiblen Vorfeldbereich.

Die Straßen- und Schienentransportmittel bewegen sich hingegen vorzugsweise ausschließlich innerhalb des öffentlich zugänglichen Betriebsbereichs. Damit entfallen auch die Sicherheitskontrollen für die Straßen- oder Schienentransportmittel sowie für deren Fahrer. Die Sicherheitskontrolle bleibt demzufolge auf die relevanten Luftfrachtladeeinheiten beschränkt, wodurch der Zeit- und Personalaufwand für alle Beteiligten reduziert wird.

Nach dem Verfahrensschritt d) und/oder e) kann der Schleusenraum als Zwischenlager genutzt werden. Da sich die Luftfrachtladeeinheiten nach diesen Verfahrensschritten im abgeschlossenen Schleusenraum befinden, ist eine Unterbrechung des Verfahrens problemlos möglich. Damit können die am Umschlag-und Kontrollprozeß beteiligten Personalgruppen sehr flexibel und weitgehend unabhängig voneinander eingesetzt werden, was sich auf die Personaleffizienz positiv auswirkt.

In einer Verfahrensvariante umfaßt die Sicherheitskontrolle in Schritt e) eine visuelle Kontrolle durch Sicherheitspersonal.

Des weiteren wird die Sicherheitskontrolle in Schritt e) besonders bevorzugt mittels einer Erfassungs- und/oder Kontrollvorrichtung durchgeführt, die wenigstens eines der folgenden Geräte oder einer Kombination derselben umfaßt:
Waage, Kamera zur Konturenmessung, Wärmebildkamera, Röntgengerät, Barcode-Erfassungsgerät, Abfrage-Sender/Empfänger für RFID-Erfassung, Gerät zur Erfassung chemischer Emissionen, Sprengstoffdetektor und Radioaktivitätsdetektor. Diese z.T. sehr teuren und komplexen Geräte der Erfassungs- und/oder Kontrollvorrichtung können besonders effizient in einer stationären Anlage eingesetzt werden, bei welcher der Schleusenraum speziell auf die Erfordernisse der Sicherheitskontrolle ausgelegt ist.

Die Erfindung umfaßt daher auch eine Umschlag- und Sicherheitskontrollanlage zur Durchführung des oben beschriebenen Verfahrens, mit einer Frachtschleuse, die einen Schleusenraum, ein Frachteingangstor und ein Frachtausgangstor aufweist, wobei der Schleusenraum über das Frachteingangstor mit einer ersten Übergabevorrichtung und über das Frachtausgangstor mit einer zweiten Übergabevorrichtung in Verbindung steht, wobei eine Steuervorrichtung vorgesehen ist, die bei öffnendem bzw. offenem Frachteingangstor sicherstellt, daß das Frachtausgangstor geschlossen ist, und umgekehrt, und wobei der Schleusenraum eine Erfassungs- und/oder Kontrollvorrichtung für die Luftfrachtladeeinheiten aufweist. Wie bereits oben erwähnt, läßt sich mit dieser Anlage das beschriebene Verfahren zum Umschlagen von Luftfrachtladeeinheiten zwischen einem öffentlich zugänglichen Betriebsbereich und einem sicherheitssensiblen Vorfeldbereich besonders effizient durchführen. Der Zeit- und Personalaufwand läßt sich nämlich unter Einhaltung jeweils geltender Sicherheitsbestimmungen erheblich verringern, da eine Erfassung und/oder Sicherheitsprüfung der Luftfrachtladeeinheiten über die Erfassungs- und/oder Kontrollvorrichtung im Schleusenraum zwischen dem Wareneingang durch das Frachteingangstor und dem Warenausgang durch das Frachtausgangstor vorgenommen wird. Es ist kein Pendelverkehr von Personal und Luftfracht-Vorfeldtransporteinheiten zwischen dem öffentlich zugänglichen Betriebsbereich und dem sicherheitssensiblen Vorfeldbereich mehr notwendig, so daß die wiederkehrenden Sicherheitskontrollen des Personals und der Vorfeldtransportmittel entfallen können. Ein weiterer Vorteil ist, daß der Umschlagvorgang und die Sicherheitskontrolle der Luftfrachtladeeinheiten zeitlich versetzt erfolgen können, ohne daß Personal- oder Transportkapazitäten gebunden sind. Hierzu werden die Luftfrachtladeeinheiten bei geschlossenem Frachteingangs- und Frachtausgangstor im Schleusenraum einfach "zwischengelagert".

In einer Ausführungsform sind das Frachteingangstor und das Frachtausgangstor an gegenüberliegenden Enden des Schleusenraums angeordnet. Die Luftfrachtladeeinheiten können dadurch z.B. auf Rollenbahnen, vorzugsweise angetriebenen Rollenbahnen, sehr einfach durch die Frachtschleuse bewegt werden, ohne daß eine Richtungsänderung notwendig ist.

Die Erfassung- und/oder Kontrollvorrichtung umfaßt besonders bevorzugt wenigstens eines der folgenden Geräte:
Waage, Kamera, Wärmebildkamera, Radioaktivitätsdetektor, Sprengstoffdetektor, Röntgengerät, Gerät zur Erfassung chemischer Emissionen, Barcode-Erfassungsgerät, Abfrage-Sender/Empfänger für RFID-Erfassung. Der Schleusenraum ist dadurch problemlos an die jeweils aktuellen Sicherheitsvorschriften anpaßbar, indem einzelne Geräte ausgetauscht oder nachgerüstet werden.

Die Erfindung wird nachfolgend anhand einer bevorzugten Ausführungsform beschrieben, die in den beigefügten Zeichnungen dargestellt ist. Dabei zeigen:
- Figur 1 eine schematische Schnittansicht der erfindungsgemäßen Umschlag-und Sicherheitskontrollanlage; und
- Figuren 2a bis 2d den schematischen Ablauf des erfindungsgemäßen Umschlagverfahrens.

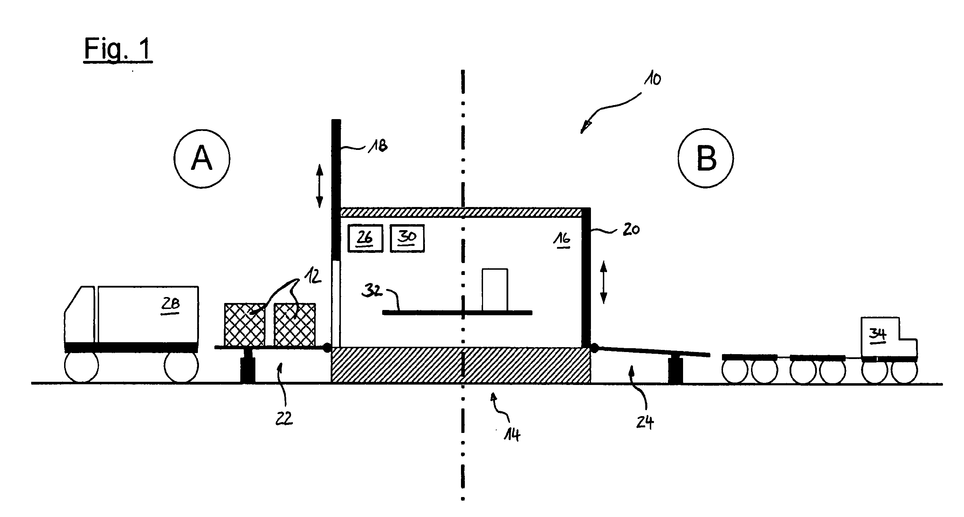

Die Figur 1 zeigt eine Umschlag- und Sicherheitskontrollanlage 10 für Luftfrachtladeeinheiten 12, mit einer Frachtschleuse 14, die einen Schleusenraum 16, ein Frachteingangstor 18 und ein Frachtausgangstor 20 aufweist. Der Schleusenraum 16 steht über das Frachteingangstor 18 mit einer ersten Übergabevorrichtung 22 und über das Frachtausgangstor 20 mit einer zweiten Übergabevorrichtung 24 in Verbindung. Die Frachtschleuse 14 weist außerdem eine Steuervorrichtung 26 auf, die bei öffnendem bzw. offenem Frachteingangstor 18 sicherstellt, daß das Frachtausgangstor 20 geschlossen ist. Genauso stellt die Steuervorrichtung 26 sicher, daß bei öffnendem bzw. offenem Frachtausgangstor 20 das Frachteingangstor 18 geschlossen ist. Die Frachtschleuse 14 ist damit eine Schnittstelle zwischen einem öffentlich zugänglichen Betriebsbereich A und einem sicherheitssensiblen Vorfeldbereich B, wobei die Steuervorrichtung 26 dafür sorgt, daß niemals eine unmittelbare, d.h. frei durchgängige Verbindung zwischen der ersten Übergabevorrichtung 22 im Bereich A und der zweiten Übergabevorrichtung 24 im Bereich B existiert.

Das Frachteingangstor 18 und das Frachtausgangstor 20 sind in der Figur 1 schematisch als Hubtore dargestellt. Alternativ sind die Tore 18, 20 in anderen Ausführungsformen als Rolltore, Flügeltore etc. ausgeführt.

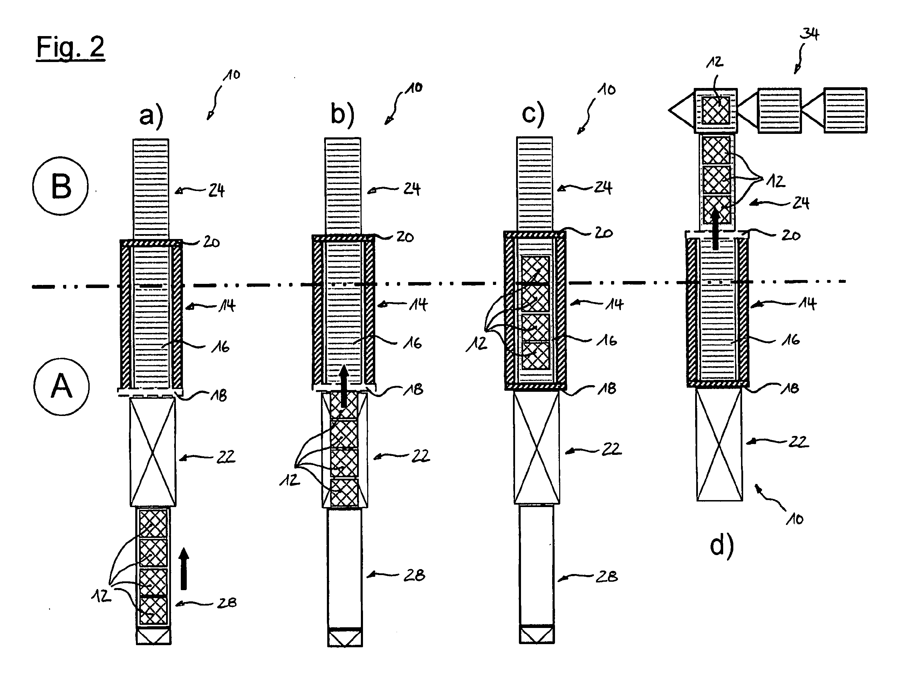

Im folgenden wird anhand der Figuren 2a bis 2d auf den Ablauf des Verfahrens zum Umschlagen von Luftfrachtladeeinheiten 12 mit entsprechender Sicherheitskontrolle eingegangen:

In einem ersten Verfahrensschritt (Figur 2a) werden die Luftfrachtladeeinheiten 12 von einem Straßen- oder Schienentransportmittel 28, beispielsweise einem LKW angeliefert und über die erste Übergabevorrichtung 22 in den Schleusenraum 16 befördert (vgl. Figur 2b). In der Figur 1 ist als erste Übergabevorrichtung 22 eine schwenkbare Rampe dargestellt. Alternativ kann jedoch auch ein Hubtisch, ein mobiles Umschlaggerät (z.B. ein Gabelstapler) oder ähnliches als erste Übergabevorrichtung 22 vorgesehen sein. Um einen reibungslosen Transport der Luftfrachtladeeinheiten 12 vom Transportmittel 28 zum Schleusenraum 16 zu gewährleisten, ist die erste Übergabevorrichtung 22 vorzugsweise so ausgebildet, daß sie in ihrer Höhe und/oder Neigung an das jeweilige Transportmittel 28 anpaßbar ist. In einigen Ausführungsvarianten weist die erste Übergabevorrichtung 22 außerdem eine Rollenbahn, vorzugsweise eine angetriebene Rollenbahn auf, um den Transport der Luftfrachtladeeinheiten 12 weiter zu vereinfachen und den gesamten Prozeß des Warenumschlags und der Sicherheitskontrolle zu beschleunigen.

In diesen Verfahrensschritten gemäß den Figuren 2a und 2b wird durch die Steuervorrichtung 26 (vgl. Figur 1) gewährleistet, daß das Frachteingangstor 18 geöffnet und das Frachtausgangstor 20 geschlossen ist. Der Schleusenraum 16 gehört somit in diesem Stadium des Warenumschlags zum öffentlich zugänglichen Betriebsbereich A und ist durch das Frachtausgangstor 20 vom sicherheitssensiblen Vorfeldbereich B getrennt. Das Entladen des Transportmittels 28 und die Beförderung der Luftfrachtladeeinheiten 12 in den Schleusenraum 16 erfolgt im Beisein von Sicherheitspersonal, das die angelieferten Luftfrachtladeeinheiten 12 auf Vollständigkeit und Unversehrtheit kontrolliert.

Nach dem Entladevorgang des Straßen- oder Schienentransportmittels 28 wird in einem weiteren Schritt das Frachteingangstor 18 geschlossen und eine Sicherheitskontrolle der Luftfrachtladeeinheiten 12 im Schleusenraum 16 vorgenommen (Figur 2c). Abhängig von den jeweiligen Sicherheitsvorschriften ist im Schleusenraum 16 eine Erfassungs- und/oder Kontrollvorrichtung 30 vorgesehen. Diese Erfassungs- und/oder Kontrollvorrichtung 30 kann beispielsweise Geräte wie eine Waage, eine Kamera (insbesondere zur Konturenmessung), eine Wärmebildkamera, einen Radioaktivitätsdetektor, einen Sprengstoffdetektor, eine Röntgengerät, ein Gerät zur Erfassung chemischer Emissionen, ein Barcode-Erfassungsgerät oder einen Abfrage-Sender/Empfänger für eine RFID-Erfassung umfassen. Außerdem kann in der Frachtschleuse 14 ein (erhöhter) Laufsteg 32 für eine visuelle Kontrolle durch Sicherheitspersonal vorgesehen sein.

Nach erfolgter Sicherheitskontrolle wird in einem weiteren Verfahrensschritt gemäß Figur 2d bei geschlossenem Frachteingangstor 18 das Frachtausgangstor 20 geöffnet, wobei der Schleusenraum 16 nun Teil des sicherheitssensiblen Vorfeldbereichs B ist und durch das geschlossene Frachteingangstor 18 vom öffentlich zugänglichen Betriebsbereich A getrennt ist. Die Luftfrachtladeeinheiten 12 können mittels einer zweiten Übergabevorrichtung 24 auf Luftfracht-Vorfeldtransporteinheiten 34, z.B. sogenannte Dollys, verladen und zu einem Flugzeug transportiert werden.

Prinzipiell kann die zweite Übergabevorrichtung 24 analog zur oben beschriebenen, ersten Übergabevorrichtung 22 ausgeführt sein. Da die Luftfracht-Vorfeldtransporteinheiten 34 in der Regel jedoch wenigstens annähernd baugleich sind, reicht für die zweite Übergabevorrichtung 24 unter Umständen auch eine einfache, starre Rampe aus. Besonders vorteilhaft ist allerdings auch die zweite Übergabevorrichtung 24 mit einer Rollenbahn, vorzugsweise einer angetriebenen Rollenbahn versehen, um den Transport der Luftfrachtladeeinheiten 12 vom Schleusenraum 16 auf die Luftfracht-Vorfeldtransporteinheit 34 zu erleichtern. Wenn alle Luftfrachtladeeinheiten 12 aus dem Schleusenraum 16 auf die Vorfeldtransporteinheiten 34 verladen sind, wird das Frachtausgangstor 20 geschlossen und anschließend das Frachteingangstor 18 geöffnet. Die Frachtschleuse 14 der Umschlag- und Sicherheitskontrollanlage 10 kann nun erneut mit Luftfrachtladeeinheiten 12 bestückt werden.

Durch das erfindungsgemäße Verfahren zum Umschlagen von Luftfrachtladeeinheiten zwischen einem öffentlich zugänglichen Betriebsbereich und einem sicherheitssensiblen Vorfeldbereich sowie die entsprechende, erfindungsgemäße Umschlag- und Sicherheitskontrollanlage 10 müssen weder das Personal noch die Vorfeldtransporteinheiten 34 die "Grenze" zwischen dem öffentlich zugänglichen Betriebsbereich A und dem sicherheitssensiblen Vorfeldbereich B überqueren. Damit entfallen die ständig wiederkehrenden Kontrollen des Personals und der Luftfracht-Vorfeldtransporteinheiten 34 beim Eintritt in den sicherheitssensiblen Vorfeldbereich B. Die Sicherheitskontrolle bleibt damit auf die relevanten Luftfrachtladeeinheiten 12 beschränkt. Der Umschlagprozeß und die Sicherheitskontrolle lassen sich dadurch schnell und effektiv durchführen.

## Patentansprüche

1. Verfahren zum Umschlagen von Luftfrachtladeeinheiten (12) zwischen einem öffentlichen zugänglichen Betriebsbereich (A) und einem sicherheitssensiblen Vorfeldbereich (B), mit
einer stationären Umschlag- und Sicherheitskontrollanlage (10), die eine erste Übergabevorrichtung (22), eine zweite Übergabevorrichtung (24) und eine dazwischenliegende Frachtschleuse (14) umfaßt,
wobei die Frachtschleuse (14) einen Schleusenraum (16) aufweist, der über ein Frachteingangstor (18) mit der ersten Übergabevorrichtung (22) und über ein Frachtausgangstor (20) mit der zweiten Übergabevorrichtung (24) in Verbindung steht, und
wobei das Verfahren folgende Schritte aufweist:
a) Die Luftfrachtladeeinheiten (12) werden von einem Straßen- oder Schienentransportmittel (28) über den öffentlich zugänglichen Betriebsbereich (A) angeliefert;
b) das Frachteingangstor (18) wird bei geschlossenem Frachtausgangstor (20) geöffnet;
c) die Luftfrachtladeeinheiten (12) werden mittels der ersten Übergabevorrichtung (22) in den Schleusenraum (16) befördert;
d) der Schleusenraum (16) wird durch Schließen des Frachteingangstors (18) vom öffentlich zugänglichen Betriebsbereich (A) getrennt;
e) im geschlossenen Schleusenraum (16) wird eine Sicherheitskontrolle der Luftfrachtladeeinheiten (12) vorgenommen;
f) der Schleusenraum (16) wird durch Öffnen des Frachtausgangstors (20) mit dem sicherheitssensiblen Vorfeldbereich (B) verbunden;
g) die Luftfrachtladeeinheiten (12) werden mittels der zweiten Übergabevorrichtung (24) auf Luftfracht-Vorfeldtransporteinheiten (34) verladen.

2. Verfahren nach Anspruch 1, **dadurch gekennzeichnet, daß** sich die Luftfracht-Vorfeldtransporteinheiten (34) ausschließlich innerhalb des sicherheitssensiblen Vorfeldbereichs (B) bewegen.

3. Verfahren nach Anspruch 1 oder 2, **dadurch gekennzeichnet, daß** sich die Straßen- oder Schienentransportmittel (28) ausschließlich innerhalb des öffentlich zugänglichen Betriebsbereichs (A) bewegen.

4. Verfahren nach einem der vorhergehenden Ansprüche, **dadurch gekennzeichnet, daß** der Schleusenraum (16) nach Schritt d) und/oder e) als Zwischenlager genutzt wird.

5. Verfahren nach einem der vorhergehenden Ansprüche, **dadurch gekennzeichnet, daß** die Sicherheitskontrolle in Schritt e) eine visuelle Kontrolle durch Sicherheitspersonal umfaßt.

6. Verfahren nach einem der vorhergehenden Ansprüche, **dadurch gekennzeichnet, daß** die Sicherheitskontrolle in Schritt e) mittels einer Erfassungs- und/oder Kontrollvorrichtung (30) durchgeführt wird, die wenigstens eines der folgenden Geräte oder eine Kombination derselben umfaßt:
Waage, Kamera zur Konturenmessung, Wärmebildkamera, Röntgengerät, Barcode-Erfassungsgerät, Abfrage-Sender/Empfänger für RFID-Erfassung, Gerät zur Erfassung chemischer Emissionen, Sprengstoffdetektor, Radioaktivitätsdetektor.

7. Umschlag- und Sicherheitskontrollanlage zum Umschlagen von Luftfrachtladeeinheiten (12) zwischen einem öffentlichen zugänglichen Betriebsbereich (A) und einem sicherheitssensiblen Vorfeldbereich (B), mit
einer Frachtschleuse (14), die einen Schleusenraum (16), ein Frachteingangstor (18) und ein Frachtausgangstor (20) aufweist,
wobei der Schleusenraum (16) über das Frachteingangstor (18) mit einer ersten Übergabevorrichtung (22) und über das Frachtausgangstor (20) mit einer zweiten Übergabevorrichtung (24) in Verbindung steht,
wobei eine Steuervorrichtung (26) vorgesehen ist, die bei öffnendem bzw. offenem Frachteingangstor (18) sicherstellt, daß das Frachtausgangstor (20) geschlossen ist, und umgekehrt, und
wobei der Schleusenraum (16) eine Erfassungs und/oder kontrollvorrichtung (30) für die Luftfrachtladeeinheiten (12) aufweist.

8. Anlage nach Anspruch 7, **dadurch gekennzeichnet, daß** das Frachteingangstor (18) und das Frachtausgangstor (20) an gegenüberliegenden Enden des Schleusenraums (16) angeordnet sind.

9. Anlage nach Anspruch 7 oder 8, **dadurch gekennzeichnet, daß** die Erfassungs- und/oder Kontrollvorrichtung (30) wenigstens eines der folgenden Geräte umfaßt: Waage, Kamera, Wärmebildkamera, Radioaktivitätsdetektor, Sprengstoffdetektor, Röntgengerät, Gerät zur Erfassung chemischer Emissionen, Barcode-Erfassungsgerät, Abfrage-Sender/Empfänger für RFID-Erfassung.

## Claims

1. A method of transferring air cargo loading units (12) between a publicly accessible operational zone (A) and a security-sensitive apron zone (B), comprising
a stationary transfer and security checking system (10) which comprises a first transfer device (22), a second transfer device (24), and a cargo lock (14) in between,
the cargo lock (14) including a lock chamber (16) which is connected to the first transfer device (22) via a cargo entrance gate (18) and to the second transfer device (24) via a cargo exit gate (20), and
the method including the following steps:
a) the air cargo loading units (12) are delivered by a road or rail transport means (28) via the publicly accessible operational zone (A);
b) the cargo entrance gate (18) is opened with the cargo exit gate (20) in the closed condition;
c) the air cargo loading units (12) are transported into the lock chamber (16) by means of the first transfer device (22);
d) the lock chamber (16) is separated from the publicly accessible operational zone (A) by closing the cargo entrance gate (18);
e) a security check of the air cargo loading units (12) is performed in the closed lock chamber (16);
f) the lock chamber (16) is connected to the security-sensitive apron zone (B) by opening the cargo exit gate (20);
g) the air cargo loading units (12) are loaded onto air cargo apron transport units (34) by means of the second transfer device (24).

2. The method according to claim 1, **characterized in that** the air cargo apron transport units (34) move exclusively inside the security-sensitive apron zone (B).

3. The method according to claim 1 or 2, **characterized in that** the road or rail transport means (28) move exclusively inside the publicly accessible operational zone (A).

4. The method according to any of the preceding claims, **characterized in that** following step d) and/or e), the lock chamber (16) is used for intermediate storage.

5. The method according to any of the preceding claims, **characterized in that** the security check in step e) comprises a visual check carried out by security staff.

6. The method according to any of the preceding claims, **characterized in that** the security check in step e) is carried out by means of a detection and/or checking device (30) which comprises at least one of the following apparatus or a combination thereof:
scales, camera for contour measurement, thermal imaging camera, X-ray apparatus, bar code scanner, interrogation transceiver for RFID detection, device for detecting chemical emissions, explosives detector, radioactivity detector.

7. A transfer and security checking system for transferring air cargo loading units (12) between a publicly accessible operational zone (A) and a security-sensitive apron zone (B), comprising
a cargo lock (14) including a lock chamber (16), a cargo entrance gate (18) and a cargo exit gate (20),
the lock chamber (16) being connected to a first transfer device (22) via the cargo entrance gate (18) and to a second transfer device (24) via the cargo exit gate (20),
a control device (26) being provided which makes sure that the cargo exit gate (20) is closed while the cargo entrance gate (18) is opening or open, and vice versa, and
the lock chamber (16) including a detection and/or checking device (30) for the air cargo loading units (12).

8. The system according to claim 7, **characterized in that** the cargo entrance gate (18) and the cargo exit gate (20) are arranged at opposite ends of the lock chamber (16).

9. The system according to claim 7 or 8, **characterized in that** the detection and/or checking device (30) comprises at least one of the following apparatus: scales, camera, thermal imaging camera, radioactivity detector, explosives detector, X-ray apparatus, device for detecting chemical emissions, bar code scanner, interrogation transceiver for RFID detection.

## Revendications

1. Procédé de transbordement d'unités de chargement de fret aérien (12) entre une zone opérationnelle (A) publiquement accessible et une aire de stationnement (B) sensible en termes de sécurité, comportant
un système stationnaire de transbordement et de contrôle de sécurité (10) comprenant un premier dispositif de transfert (22), un deuxième dispositif de transfert (24) et un sas de fret (14) agencé entre les deux,
le sas de fret (14) présentant une chambre de sas (16) reliée au premier dispositif de transfert (22) par une porte d'entrée de fret (18), et au deuxième dispositif de transfert (24) par une porte de sortie de fret (20), et
le procédé comprenant les étapes suivantes :
a) les unités de chargement de fret aérien (12) sont délivrées par un moyen de transport routier ou ferroviaire (28) via la zone opérationnelle (A) publiquement accessible ;
b) la porte d'entrée de fret (18) est ouverte lorsque la porte de sortie de fret (20) est fermée ;
c) les unités de chargement de fret aérien (12) sont transportées dans la chambre de sas (16) au moyen du premier dispositif de transfert (22) ;
d) la chambre de sas (16) est séparée de la zone opérationnelle (A) publiquement accessible en fermant la porte d'entrée de fret (18) ;
e) un contrôle de sécurité des unités de chargement de fret aérien (12) est effectué dans la chambre de sas (16) fermée ;
f) la chambre de sas (16) est reliée à l'aire de stationnement (B) sensible en termes de sécurité en ouvrant la porte de sortie de fret (20) ;
g) les unités de chargement de fret aérien (12) sont chargées sur des unités de transport (34) d'aire de stationnement de fret aérien au moyen du deuxième dispositif de transfert (24).

2. Procédé selon la revendication 1, **caractérisé en ce que** les unités de transport (34) d'aire de stationnement de fret aérien se déplacent uniquement à l'intérieur de l'aire de stationnement (B) sensible en termes de sécurité.

3. Procédé selon la revendication 1 ou 2, **caractérisé en ce que** les moyens de transport (28) routiers ou ferroviaires se déplacent uniquement à l'intérieur de la zone opérationnelle (A) publiquement accessible.

4. Procédé selon l'une des revendications précédentes, **caractérisé en ce que** la chambre de sas (16) est utilisée comme dépôt provisoire après l'étape d) et/ou e).

5. Procédé selon l'une des revendications précédentes, **caractérisé en ce que** le contrôle de sécurité à l'étape e) comporte un contrôle visuel par du personnel de sécurité.

6. Procédé selon l'une des revendications précédentes, **caractérisé en ce que** le contrôle de sécurité à l'étape e) est effectué au moyen d'un dispositif de détection et/ou de contrôle (30) qui comprend au moins un des appareils suivants ou une combinaison de ces appareils :
balance, caméra pour la mesure des contours, caméra à infrarouge, appareil de radiographie, appareil de détection de codes à barres, émetteur/récepteur d'interrogation pour la détection RFID, appareil de détection d'émissions chimiques, détecteur d'explosifs, détecteur de radioactivité.

7. Système de transbordement et de contrôle de sécurité pour le transbordement d'unités de chargement de fret aérien (12) entre une zone opérationnelle (A) publiquement accessible et une aire de stationnement (B) sensible en termes de sécurité, présentant :
un sas de fret (14) comportant une chambre de sas (16), une porte d'entrée de fret (18) et une porte de sortie de fret (20),
la chambre de sas (16) étant reliée à un premier dispositif de transfert (22) par la porte d'entrée de fret (18), et à un deuxième dispositif de transfert (24) par la porte de sortie de fret (20),
un dispositif de commande (26) étant prévu, lequel assure que la porte de sortie de fret (20) est fermée lorsque la porte d'entrée de fret (18) s'ouvre ou est ouverte, et vice versa, et
la chambre de sas (16) présentant un dispositif de détection et/ou de contrôle (30) pour les unités de chargement de fret aérien (12).

8. Système selon la revendication 7, **caractérisé en ce que** la porte d'entrée de fret (18) et la porte de sortie de fret (20) sont agencées à des extrémités opposées de la chambre de sas (16).

9. Système selon la revendication 7 ou 8, **caractérisé en ce que** le dispositif de détection et/ou de contrôle (30) comprend au moins un des appareils suivants : balance, caméra, caméra à infrarouge, détecteur de radioactivité, détecteur d'explosifs, appareil de radiographie, appareil de détection d'émissions chimiques, appareil de détection de codes à barres, émetteur/récepteur d'interrogation pour la détection RFID.
